# EUROPÄISCHE PATENTSCHRIFT

(11) **EP 0 455 120 B1**
(45) Veröffentlichungstag und Bekanntmachung des Hinweises auf die Patenterteilung: **17.08.1994**
(21) Anmeldenummer: 91106569.6
(22) Anmeldetag: 24.04.1991
(51) Int. Cl.: H02M 5/00, H02M 5/44

(54) **Stromrichteranlage mit Gleichspannungszwischenkreis und Stromrichtermodulen**
Power converter assembly with intermediate DC circuit and converter modules
Arrangement de convertisseur de courant à circuit intermédiaire continu et modules convertisseurs

(30) Priorität: 30.04.1990 DE 4013820; 23.06.1990 DE 4020026
(43) Veröffentlichungstag der Anmeldung: 06.11.1991
(73) Patentinhaber: ABB PATENT GmbH, 68309 Mannheim (DE)
(72) Erfinder: Zengerle, Manfred, W-6719 Ebertsheim (DE); Bendien, Johan, Dr., W-6943 Birkenau (DE)
(74) Vertreter: Rupprecht, Klaus, Dipl.-Ing.

(56) Entgegenhaltungen:
- EP-A- 0 185 773
- AR-C-H. PH ARM
- CH-E-M PHA RM
- GA-Z-Z. CH IM.
- GB-A- 2 214 731
- IN-D-. J.C HEM
- SY-N-TH . C OMM

## Beschreibung

Die Erfindung bezieht sich auf eine Stromrichteranlage mit einem eine Kondensatorbatterie aufweisenden Gleichspannungszwischenkreis, bestehend aus mindestens einem Stromrichtermodul, dessen elektrische Modulanschlüsse in einer Reihe angeordnet und mit einem ersten Verbindungsschienensystem kontaktierbar sind. Unter einem Stromrichtermodul oder Modul wird nachfolgend eine ein Gehäuse aufweisende, Leistugsschalter (Thyristoren, GTO-Thyristoren) sowie Beschaltungselemente enthaltende und an einen externen Kühlkreislauf anschließbare Baueinheit verstanden.

Eine derartige Stromrichteranlage ist in der DE-Anmeldung P 40 08 419.1 (veröffentlicht am 19/9/91), sowie in GB-A-2 214 731 vorgeschlagen worden.

Für Hochleistungslokomotiven mit Drehstromantriebstechnik werden zunehmend Stromrichter mit GTO-Thyristoren eingesetzt. Diese Stromrichter sind modular aufgebaut und bestehen insbesondere aus folgenden Hauptkomponenten: Leistungsschalter, Beschaltungselemente zur Verlustreduzierung, Verschienung, Gleichspannungszwischenkreis gestützt von einer Kondensatorbatterie mit mehreren Kondensatoren, Kühlkreislauf, Steuerolektronik.

Diese Hauptkomponenten sind möglichst nahe zueinander anzuorden, um die Induktivität zwischen den Komponenten klein zu halten und auf diese Weise die elektrische und thermische Beanspruchung der Bauteile, insbesondere der GTO-Thyristoren, zu minimieren.

Die Halbleiter werden bei der DE-Anmeldung P 40 08 419.1 innerhalb der einzelnen Stromrichtermodule gestapelt angeordnet. Es werden elektrische und mechanische Verbindungen vorgeschlagen, bei denen die Zugänglichkeit aller Komponenten aus Wartungsgründen in einfacher Weise gegeben ist.

Darüberhinaus besteht die Forderung nach modular aufgebauten Stromrichteranlagen, da je nach Schaltung und Lokomotivart eine unterschiedliche Anzahl von Modulen an einem Gleichspannungszwischenkreis gekoppelt sind. Bei der Lösung nach der DE-Anmeldung P 40 08 419.1 wird das Zusammenfügen von zwei Stromrichtermodulen begünstigt, da beide Module auf kürzestem Weg an die Kondensatorbatterie des Gleichspannungszwischenkreises angebunden sind. Dabei muß allerdings ein Stromrichtermodul mechanisch spiegelbildlich angeordnet werden, was die Handhabbarkeit hinsichtlich Symmetrie (unterschiedliche Prüfverfahren usw.) erschwert. Zudem ist ein solches System nicht gut erweiterbar.

Der Erfindung liegt die Aufgabe zugrunde, eine Stromrichteranlage mit Gleichspannungszwischenkreis und Stromrichtermodulen der eingangs genannten Art anzugeben, die in einfacher Art und Weise aus einem oder mehreren gleichen Stromrichtermodulen aufgebaut werden kann.

Diese Aufgabe wird für eine aus mindestens einem Stromrichtermodul bestehende Stromrichteranlage mit einem eine Kondensatorbatterie aufweisenden Gleichspannungszwischenkreis durch folgende Merkmale gelöst:
- die elektrischen Modulanschlüsse der Stromrichtermodule sind in einer Reihe angeordnet und mit einem ersten induktivitätsarmen Verbindungsschienensystem kontaktierbar,
- die Kondensatorbatterie ist dem Stromrichtermodul mechanisch zugeordnet,
- die elektrischen Anschlüsse der Kondensatorbatterie liegen an einem zweiten, die Gleichspannungszwischenkreis-Leitungen enthaltenden, senkrecht zum ersten Verbindungsschienensystem angeordneten induktivitätsarmen Verbindungsschienensystem, das mit dem ersten Verbindungsschienensystem elektrisch in Verbindung steht.

Unter einem Stromrichter ist nachfolgend ein Modul und eine ihm zugeordnete Kondensator- oder Teil-Kondensatorbatterie zu verstehen. Eine Stromrichteranlage kann sich demnach aus einem oder mehreren Stromrichter(n) zusammensetzen.

Die mit der Erfindung erzielbaren Vorteile bestehen insbesondere darin, daß durch die vorgeschlagene mechanische Zuordnung der Kondensatorbatterie des Gleichstromzwischenkreises zum Stromrichtermodul und die spezielle L-förmige Verschienung, ein induktivitätsarmer "Einheits-Stromrichter" geschaffen wird, der sich ohne Veränderung in unterschiedlichen Stromrichteranlagen einsetzen läßt. Bei einer Stromrichteranlage mit lediglich einem Stromrichtermodul ist diesem einzigen Modul die Gesamt-Kondensatorbatterie des Gleichspannungszwischenkreises zugeordnet, während sich bei einer Stromrichteranlage mit mehreren Stromrichtermodulen eine Aufteilung der Gesamt-Kondensatorbatterie des Gleichspannungszwischenkreises in einzelne, jeweils den einzelnen Stromrichtermodulen mechanisch zugeordnete Teil-Kondensatorbatterien ergibt.

Der vorgeschlagene Stromrichter ist beliebig erweiterbar, indem eine einfache Verkopplung der jeweils den Modulen zugeordneten Teil-Kondensatorbatterien der Gleichspannungszwischenkreise durch kurze elektrische Kupplungen vorgenommen werden kann. Ein weiterer Vorteil ergibt sich durch die niederinduktiven Verschienungen, insbesondere der Gleichspannungszwischenkreisleitungen und der Einspeiseleitungen unter Einhaltung der aus Gründen der Spannungsdurchschlagsbeanspruchung erforderlichen Maßnahmen. Zur Bildung einer Stromrichteranlage können somit mechanisch gleiche "Einheits-Stromrichter" je nach erforderlicher Schaltung verbunden werden, während zur Kopplung zweier benachbarter Stromrichter mechanisch gleiche elektrische Verbindungen eingesetzt werden, was die Konstruktion, Produktion, Prüfung, Ersatzteilbevorratung usw. erleichtert. Durch die Aufteilung der gesamten Kondensatorbatterie in einzelne, den Modulen jeweils zugeordnete Teil-Kondensatorbatterien ergibt sich stets eine richtige Dimensionierung der Kapazität des Gleichspannungszwischenkreises.

Die Erfindung ist im Anspruch 1 beschrieben.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: einen aus einem Stromrichtermodul aufgebauten Stromrichter,
- Fig. 2: einen aus zwei Stromrichtermodulen aufgebauten Stromrichter,
- Fig. 3: das elektrische Schaltbild eines aus vier Stromrichtermodulen aufgebauten Stromrichters,
- Fig. 4: die räumlich-mechanische Anordnung der einzelnen Stromrichtermodule bei der Variante gemäß Fig. 3.

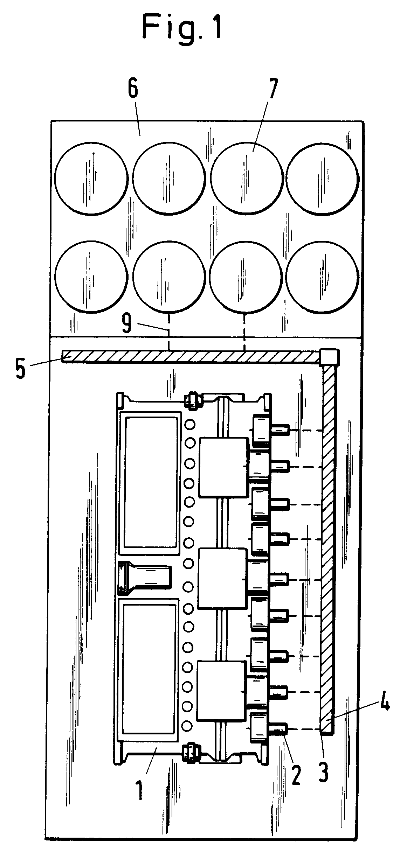

In Fig. 1 ist ein aus einem Stromrichtermodul aufgebauter Stromrichter dargestellt. Es ist ein Stromrichtermodul 1 zu erkennen, das mit Stromrichterventilen (vorzugsweise GTO-Thyristoren), Beschaltungskomponenten für die Stromrichterventile (Drosseln, Widerstände usw.) und Steuerelektroniken zur Ansteuerung der Ventile versehen ist. Das Modul ist vorzugsweise flüssigkeitsgekühlt und mit entsprechenden Anschlußkomponenten (z.B. Schnellverschlußkupplungen) zum Anschluß an einen externen Kühlkreislauf ausgestattet. Die elektrischen Modulanschlüsse 2 (Anschlüsse für die Einspeisung, für den Gleichspannungszwischenkreis und für die Last) sind vertikal angeordnet und mit entsprechenden Anschlußkomponenten eines vertikalen Verbindungsschienensystems 4 kontaktiert.

Die Kondensatorbatterie 6 des Gleichspannungszwischenkreises des Stromrichters ist dem Modul 1 mechanisch direkt zugeordnet und besteht aus mehreren einzelnen Kondensatoren 7, die sich beispielsweise oberhalb des Moduls befinden. Zwischen der Teil-Kondensatorbatterie 6 und dem Stromrichtermodul 1 ist ein horizontales Verbindungsschienensystem 5 angeordnet, das mit dem vertikalen Verbindungsschienensystem 4 verbunden ist und mit diesem ein gemeinsames elektrisches Verbindungsschienensystem 3 bildet.

Die Kondensatorbatterie 6 ist über elektrische Kondensatoranschlüsse 9 mit dem horizontalen Verbindungsschieriensystem 5 kontaktiert.

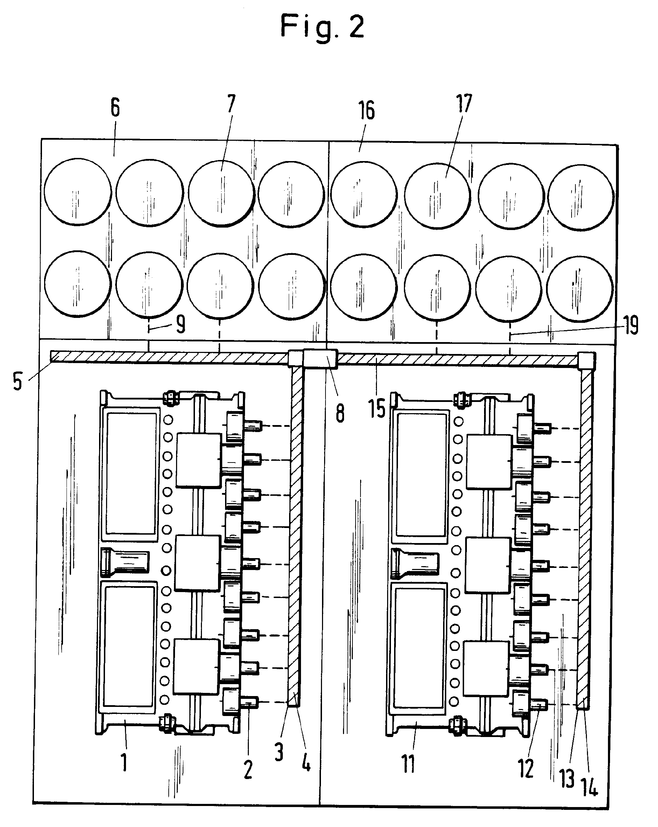

In Fig. 2 ist ein aus zwei Stromrichtermodulen aufgebauter Stromrichter dargestellt. Im einzelnen sind zwei Stromrichtermodule 1 bzw. 11 mit elektrischen Modulanschlüssen 2 bzw. 12 zu erkennen. Die Kondensatorbatterie des Gleichspannungszwischenkreises des Stromrichters ist beim Beispiel gemäß Fig. 2 in zwei Teil-Kondensatorbatterien 6, 16 von jeweils gleicher Kapazität und Spannungsfestigkeit aufgeteilt, die jeweils aus mehreren einzelnen Kondensatoren 7, 17 aufgebaut sind. Die Teil-Kondensatorbatterien 6, 16 sind den Stromrichtermodulen 1, 11 direkt räumlich zugeordnet und befinden sich beispielsweise oberhalb der Module. Zwischen den Teil-Kondensatorbatterien 6, 16 und den Stromrichtermodulen 1, 11 sind jeweils horizontale Verbindungsschienensysteme 5, 15 angeordnet, die mit den vertikalen Verbindungsschienensystemen 4, 14 zusammengesetzt sind und mit diesen ein gemeinsames elektrisches Verbindungsschienensystem 3, 13 bilden.

Die Teil-Kondensatorbatterien 6, 16 sind jeweils über elektrische Kondensatoranschlüsse 9, 19 mit dem horizontalen Verbindungsschienensystem 5, 15 kontaktiert. Ein Zusammenfügen zwischen den einzelnen elektrischen Verbindungsschienensystemen 3, 13 untereinander erfolgt mittels einer elektrischen Kupplung 8, die das dem Stromrichtermodul 1 zugeordnete horizontale Verbindungsschienensystem 5 mit dem dem Stromrichtermodul 11 zugeordneten horizontalen Verbindungsschienensystem 15 in Kontakt bringt.

Der in Fig. 2 gezeigte Stromrichter ist beliebig erweiterbar, indem weitere Stromrichtermodule direkt neben die beiden vorhandenen Module 1, 11 plaziert werden. Jedes weitere Stromrichtermodul besitzt ebenfalls eine ihm räumlich zugeordnete Teil-Kondensatorbatterie und ein eigenes, ihm zugeordnetes elektrisches Verbindungsschienensystem, bestehend aus einem vertikalen und einem horizontalen Verbindungsschienensystem. Zur elektrischen Kontaktierung der Verbindungsschienensysteme werden weitere elektrische Kupplungen eingesetzt, die die horizontalen Verbindungsschienensysteme benachbarter Stromrichtermodule miteinander verbinden.

Auf diese Art und Weise wird ein allen Modulen des Stromrichters gemeinsames, durchgehendes horizontales Verbindungsschienensystem geschaffen, das zum Anschluß der den einzelnen Modulen räumlich zugeordnten Teil-Kondensatorbatterien dient, wodurch eine Gesamt-Kondensatorbatterie für den Gleichspannungszwischenkreis des Stromrichters geschaffen wird, deren Kapazität der Anzahl und Leistungsfähigkeit der einzelnen Module des Stromrichters angepaßt ist.

Gemäß einer ersten Variante erfolgen die Einspeisung der Module (z.B: eines Vierquadrantenstellers, eines üblichen Gleichrichters oder eines Gleichspannungsstellers) und der Lastanschluß (z.B. eines üblichen Wechselrichters) über den Fußpunkt des vertikalen Verbindungsschienensystems. Bei dieser Variante ist es nicht notwendig, daß das horizontale Verbindungsschienensystem neben den Gleichspannungszwischenkreis-Leitungen auch Einspeiseleitungen und Lastanschlußleitungen enthält. Dies ist jedoch auch nicht ausgeschlossen und z.B. dann sinnvoll, wenn zwei gleichartig aufgebaute Stromrichtermodule parallel arbeiten, wenn also beispielsweise zwei Gleichrichter mit ein- und denselben Einspeiseleitungen zu verbinden sind und auf denselben Gleichspannungszwischenkreis arbeiten. Bei einer solchen Konfiguration kann der eine Gleichrichter über den Fußpunkt des vertikalen Verbindungsschienensystems und der andere Gleichrichter über das horizontale Verbindungsschienensystem versorgt werden.

Gemäß einer zweiten Variante erfolgt die Einspeisung der Module sowie der Lastanschluß über das horizontale Verbindungsschienensystem, das demnach neben den Gleichspannungszwischenkreis-Leitungen auch Einspeiseleitungen und Lastanschlußleitungen enthält. Der komplette elektrische Anschluß eines Moduls erfolgt bei dieser Variante über die jeweiligen vertikalen Verbindungsschienensysteme aus dem horizontalen Verbindungsschienensystem im Sinne eines Bus-Systems. Es reicht aus, wenn das horizontale Verbindungsschienensystem an einem seiner beiden Enden mit dem Netz und der Last verbunden ist.

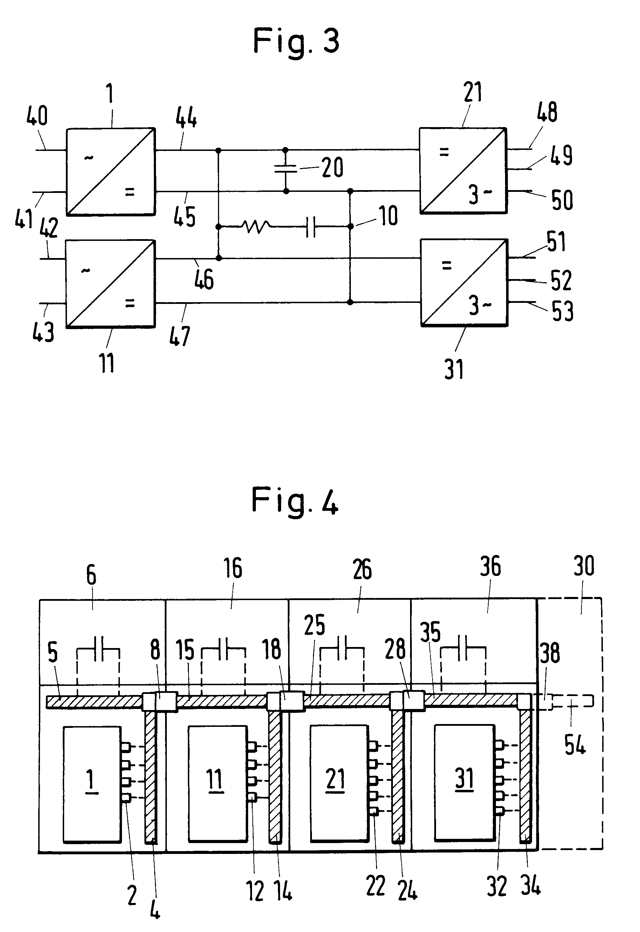

In Fig. 3 ist das elektrische Schaltbild eines aus vier Stromrichtermodulen aufgebauten Stromrichters als weiteres Ausführungsbeispiel dargestellt. Im einzelnen sind zwei Vierquadrantensteller 1, 11 und zwei Wechselrichter 21, 31 als Stromrichtermodule vorgesehen. Die Vierquadrantensteller 1 bzw. 11 sind eingangsseitig mit Einspeiseleitungen 40, 41 bzw. 42, 43 und ausgangsseitig mit Gleichspannungszwischenkreis-Leitungen 44, 45 bzw. 46, 47 verbunden. Die Leitungen 44 und 46 sowie 45 und 47 sind jeweils miteinander verbunden. Zwischen den Leitungen 44/46 und 45/47 sind eine Kondensatorbatterie 20 des Gleichspannungszwischenkreises und ein Saugkreis 10 (bestehend aus Drossel und Kondensator) angeordnet.

Die Wechselrichter 21 bzw. 31 sind eingangsseitig mit den Gleichspannungszwischenkreis-Leitungen 44, 45 bzw. 46, 47 und ausgangsseitig mit Drehstrom-Lastanschlußleitungen 48, 49, 50 bzw. 51, 52, 53 verbunden. Der dargestellte Stromrichter dient vorzugsweise als Traktionsstromrichter zur Speisung von Drehstrom-Asynchronmaschinen mit variabler Frequenz und Spannung (siehe hierzu beispielsweise BBC-Druckschrift Nr. DVK 1047 81D, Elektrische Universal-Lokomotive E 120 der DB).

In Fig. 4 ist die räumlich-mechanische Anordnung der einzelnen Stromrichtermodule bei der Variante gemäß Fig. 3 dargestellt. Die einzelnen Stromrichtermodule 1, 11, 21, 31 mit den jeweils zugeordnet Teil-Kondensatorbatterien 6, 16, 26, 36 sind nebeneinander in einer Reihe angeordnet. Die Teil-Kondensatorbatterien 6, 16, 26, 36 bilden zusammen die Gesamt-Kondensatorbatterie 20 gemäß Fig. 2. Die den einzelnen Stromrichtermodulen 1, 11, 21, 31 eigenen elektrischen Verbindungsschienensysteme weisen jeweils vertikale Verbindungsschienensysteme 4, 14, 24, 34 sowie horizontale Verbindungsschienensysteme 5, 15, 25, 35 auf, wobei die horizontalen Verbindungsschienen 5 und 15, 15 und 25 sowie 25 und 35 mittels elektrischer Kupplungen 8, 18, 28, miteinander elektrisch kontaktiert sind. Die vertikal in einer Reihe angeordneten, mit den vertikalen Verbindungsschienensystemen 4, 14, 24, 34 in Kontakt tretenden elektrischen Modulanschlüsse sind mit Ziffern 2, 12, 22, 32 bezeichnet. Desweiteren sind die einzelnen elektrischen Kondensatoranschlüsse zwischen den Teil-Kondensatorbatterien 6, 16, 26, 36 und den horizontalen Verbindungsschienensystemen 5, 15, 25, 35 angedeutet.

Gemäß der unter Fig. 2 erwähnten ersten Variante erfolgt die Einspeisung (siehe Einspeiseleitungen 40 bis 43 gemäß Fig. 3) der Vierquadrantensteller 1, 11 über die Fußpunkte der vertikalen Verbindungsschienensysteme 4, 14, während die Lastanschlüsse (siehe Drehstrom-Lastanschlußleitungen 48 bis 53 gemäß Fig. 3) mit den Fußpunkten der vertikalen Verbindungsschienensysteme 24, 34 kontaktiert sind. Das aus den komponenten 5, 15, 25, 35 bestehende horizontale Verbindungsschienensystem enthält lediglich die Gleichspannungszwischenkreis-Leitungen (siehe Gleichspannungszwischenkreis-Leitungen 44 bis 47 gemäß Fig. 3).

Gemäß der unter Fig. 2 erwähnten zweiten Variante enthält das aus den Komponenten 5, 15, 25, 35 bestehende horizontale Verbindungsschienensystem sowohl die Gleichspannungszwischenkreis-Leitungen 44 bis 47 als auch die Einspeiseleitungen 40 bis 43 und die Drehstrom-Lastanschlußleitungen 48 bis 53. Die vertikalen Verbindungsschienensysteme 4, 14, 24, 34 greifen die jeweils für das zugeordnete Stromrichtermodul benötigten Schienen zur Kontaktierung mit den elektrischen Modulanschlüssen ab.

Gemäß einer weiteren Ausgestaltung des in Fig. 4 dargestellten Stromrichters kann der Saugkreis 10 gemäß Fig. 3 durch ein Saugkreismodul 30 realisiert sein, das in einer Reihe neben den Stromrichtermodulen angeordnet ist. Dieses Saugkreismodul 30 weist ebenfalls ein horizontales Verbindungsschienensystem 54 auf, das über eine elektrische Kupplung 38 mit dem horizontalen Verbindungsschienensystem 35 des benachbarten Moduls 31 kontaktiert ist. An die Gleichspannungszwischenkreis-Leitungen des horizontalen Verbindungsschienensystems 54 sind die Drossel und der Kondensator des Saugkreises 10 angeschlossen.

Allgemein gilt für alle beschriebenen Ausführungsvarianten, daß die Teil-Kondensatorbatterien auch unterhalb der Stromrichtermodule angeordnet sein können, wobei jedoch die horizontalen Verbindungsschienensysteme stets zwischen Teil-Kondensatorbatterien und Modulen anzuordnen sind.

Allgemein wird bei den vorstehend erläuterten Ausführungsbeispielen vorausgesetzt, daß die elektrischen Modulanschlüsse der horizontal nebeneinander angeordneten Stromrichtermodule vertikal in einer Reihe liegen und mit den vertikalen Verbindungsschienensystemen kontaktiert werden. Hieraus resultiert, daß die Gleichspannungszwischenkreis-Leitungen im horizontalen Verbindungsschienensystemen unterzubringen sind. Es sind jedoch auch andere Stromrichteranordnungen mit vertikal gestapelten Stromrichtermodulen oder mit horizontal in einer Reihe liegenden elektrischen Modulanschlüssen der Stromrichtermodule vorstellbar, so daß gegebenenfalls auch vertikale Verbindungsschienensysteme mit Gleichspannungszwischenkreis-Leitungen und horizontale Verbindungsschienensysteme zur Kontaktierung der elektrischen Modulanschlüsse einsetzbar sind. Wesentlich bei diesen unterschiedlichen Anordnungsmöglichkeiten ist lediglich, daß das die Gleichspannungszwischenkreis-Leitungen enthaltende Verbindungsschienensystem senkrecht zum die elektrischen Modulanschlüsse kontaktierenden Verbindungsschienensystem angeordnet ist.

## Patentansprüche

1. Stromrichteranlage mit einem eine Kondensatorbatterie aufweisenden Gleichspannungszwischenkreis, bestehend aus mindestens einem Stromrichtermodul (1,11,21,31), dessen elektrische Modulanschlüsse (2,12,22,32) in einer Reihe angeordnet und mit einem ersten induktivitätsarmen Verbindungsschienensystem (4,14,24,34) kontaktierbar sind, wobei die Kondensatorbatterie (6,16,26,36) dem Stromrichtermodul mechanisch zugeordnet ist und ihre elektrischen Anschlüsse (9,19) an einem zweiten, die Gleichspannungszwischenkreis-Leitungen (44,45,46,47) enthaltenden, senkrecht zum ersten Verbindungsschienensystem angeordneten, induktivitätsarmen Verbindungsschienensystem (5,15,25,35) liegen, das mit dem ersten Verbindungsschienensystem elektrisch in Verbindung steht.

2. Stromrichteranlage nach Anspruch 1, dadurch gekennzeichnet, daß bei einer mindestens zwei Stromrichtermodule (1,11,21,31) enthaltenden Anlage die Gesamt-Kondensatorbatterie des Gleichspannungszwischenkreises in einzelne, jeweils den einzelnen Stromrichtermodulen mechanisch zugeordnete Teil-Kondensatorbatterien (6,16,26,36) aufgeteilt ist und die zweiten Verbindungsschienensysteme (5,15,25,35) benachbarter Module jeweils über elektrische Kupplungen (8,18,28,38) miteinander verbunden sind.

3. Stromrichteranlage nach Anspruch 1, dadurch gekennzeichnet, daß bei einer mindestens zwei Stromrichtermodule (1,11,21,31) enthaltenden Anlage die Gesamt-Kondensatorbatterie des Gleichspannungszwischenkreises in einzelne, jeweils den einzelnen Stromrichtermodulen mechanisch zugeordnete Teil-Kondensatorbatterien (6,16,26,36) aufgeteilt ist, die über eine durchgehende zweite Verbindungsschiene miteinander verbunden sind.

4. Stromrichteranlage nach den Ansprüchen 1 bis 3, dadurch gekennzeichnet, daß das erste Verbindungsschienensystem (4,14,24,34) vertikal und das zweite Verbindungsschienensystem (5,15,25,35) horizontal angeordnet sind.

5. Stromrichteranlage nach einem der Ansprüche 1 bis 4, dadurch gekennzeichnet, daß das zweite Verbindungsschienensystem (5,15,25,35) zusätzlich die Einspeiseleitungen (40,41,42,43) für die Stromrichtermodule (1,11,21,31) enthält.

6. Stromrichteranlage nach einem der Ansprüche 1 bis 5, dadurch gekennzeichnet, daß das zweite Verbindungsschienensystem (5,15,25,35) zusätzlich die Lastanschlußleitungen (48 bis 53) für die Stromrichtermodule (1,11,21,31) enthält.

7. Stromrichteranlage nach einem der Ansprüche 1 bis 6, dadurch gekennzeichnet, daß die Einspeisung der Stromrichtermodule (1,11,21,31) über das erste Verbindungsschienensystem (4,14,24,34) erfolgt.

8. Stromrichteranlage nach einem der Ansprüche 1 bis 7, dadurch gekennzeichnet, daß der Lastanschluß am ersten Verbindungsschienensystem (4,14,24,34) vorgenommen wird.

9. Stromrichteranlage nach einem der Ansprüche 1 bis 6, dadurch gekennzeichnet, daß die Einspeisung der Stromrichtermodule (1,11,21,31) über das zweite Verbindungsschienensystem (5,15,25,35) erfolgt.

10. Stromrichteranlage nach einem der Ansprüche 1 bis 6 und 9, dadurch gekennzeichnet, daß der Lastanschluß am zweiten Verbindungsschienensystem (5,15,25,35) vorgenommen wird.

## Claims

1. Converter system with an intermediate direct voltage circuit which has a battery of capacitors, consisting of at least one converter module (1, 11, 21, 31) whose electrical module terminals (2, 12, 22, 32) are arranged in a row and can be connected to a first low-inductance busbar system (4, 14, 24, 34), the battery of capacitors (6, 16, 26, 36) being mechanically assigned to the converter module and their electrical terminals (9, 19) being connected to a second low-inductance busbar system (5, 15, 25, 35) which contains the lines (44, 45, 46, 47) for the intermediate direct voltage circuit, is arranged perpendicularly with respect to the first busbar system and is electrically connected to the first busbar system.

2. Converter system according to Claim 1, characterized in that in a system which contains at least two converter modules (1, 11, 21, 31), the entire battery of capacitors of the intermediate direct voltage circuit is divided up into individual sub-batteries of capacitors (6, 16, 26, 36) which are mechanically assigned in each case to the individual converter modules, and the second busbar systems (5, 15, 25, 35) of adjacent modules are each connected to one another via electrical couplings (8, 18, 28, 38).

3. Converter system according to Claim 1, characterized in that in a system which contains at least two converter modules (1, 11, 21, 31), the entire battery of capacitors of the intermediate direct voltage circuit is divided up into individual sub-batteries of capacitors (6, 16, 26, 36) which are mechanically assigned in each case to the individual converter modules and are connected to one another via a continuous second busbar.

4. Converter system according to Claims 1 to 3, characterized in that the first busbar system (4, 14, 24, 34) is arranged vertically and the second busbar system (5, 15, 25, 35) is arranged horizontally.

5. Converter system according to one of Claims 1 to 4, characterized in that the second busbar system (5, 15, 25, 35) additionally contains the feed lines (40, 41, 42, 43) for the converter modules (1, 11, 21, 31).

6. Converter system according to one of Claims 1 to 5, characterized in that the second busbar system (5, 15, 25, 35) additionally contains the load-connection lines (48 to 53) for the converter modules (1, 11, 21, 31).

7. Converter system according to one of Claims 1 to 6, characterized in that the converter modules (1, 11, 21, 31) are supplied with current via the first busbar system (4, 14, 24, 34).

8. Converter system according to one of Claims 1 to 7, characterized in that the load is connected to the first busbar system (4, 14, 24, 34).

9. Converter system according to one of Claims 1 to 6, characterized in that the converter modules (1, 11, 21, 31) are supplied with current via the second busbar system (5, 15, 25, 35).

10. Converter system according to one of Claims 1 to 6 and 9, characterized in that the load is connected to the second busbar system (5, 15, 25, 35).

## Revendications

1. Dispositif convertisseur de courant comprenant un circuit intermédiaire de tension continue présentant une batterie de condensateurs, ce dispositif étant composé d'au moins un module convertisseur (1, 11, 21, 31) dont les connexions électriques (2, 12, 22, 32) sont disposées en une rangée et peuvent être reliées à un premier système de barres de liaison (4, 14, 24, 34) à faible inductance, la batterie de condensateurs (6, 16, 26, 36) étant associée mécaniquement au module convertisseur et ses connexions électriques (9, 19) étant situées dans un deuxième système de barres de liaison (5, 15, 25, 35) à faible inductance, disposé perpendiculairement au premier système de barres de liaison, contenant les lignes de circuit intermédiaire de tension continue (44, 45, 46, 47) et relié électriquement au premier système de barres de liaison.

2. Dispositif convertisseur de courant suivant la revendication 1, **caractérisé** par le fait que dans un dispositif contenant au moins deux modules convertisseurs (1, 11, 21, 31), la batterie totale de condensateurs du circuit intermédiaire de tension continue est subdivisée en batteries partielles individuelles de condensateurs (6, 16, 26, 36) associées mécaniquement respectivement aux différents modules convertisseurs, et les deuxièmes systèmes de barres de liaison (5, 15, 25, 35) des modules voisins sont reliés entre eux par des dispositifs de couplage électriques (8, 18, 28, 38).

3. Dispositif convertisseur de courant suivant la revendication 1, **caractérisé** par le fait que dans un dispositif contenant au moins deux modules convertisseurs (1, 11, 21, 31), la batterie totale de condensateurs du circuit intermédiaire de tension continue est subdivisée en batteries partielles individuelles de condensateurs (6, 16, 26, 36) associées mécaniquement respectivement aux différents modules redresseurs et reliées entre elles par un deuxième système continu de barres de liaison.

4. Dispositif convertisseur de courant suivant les revendications 1 à 3, **caractérisé** par le fait que le premier système de barres de liaison (4, 14, 24, 34) est disposé verticalement et le deuxième système de barres de liaison (5, 15, 25, 35) est disposé horizontalement.

5. Dispositif convertisseur de courant suivant l'une des revendications 1 à 4, **caractérisé** par le fait que le deuxième système de barres de liaison (5, 15, 25, 35) contient en outre les lignes d'alimentation (40, 41, 42, 43) pour les modules convertisseurs (1, 11, 21, 31).

6. Dispositif convertisseur de courant suivant l'une des revendications 1 à 5, **caractérisé** par le fait que le deuxième système de barres de liaison (5, 15, 25, 35) contient en outre les lignes de connexion de charge (48 à 53) pour les modules convertisseurs (1, 11, 21, 31).

7. Dispositif convertisseur de courant suivant l'une des revendications 1 à 6, **caractérisé** par le fait que l'alimentation des modules convertisseurs (1, 11, 21, 31) s'effectue par le premier système de barres de liaison (4, 14, 24, 34).

8. Dispositif convertisseur de courant suivant l'une des revendications 1 à 7, **caractérisé** par le fait que la connexion de charge s'effectue sur le premier système de barres de liaison (4, 14, 24, 34).

9. Dispositif convertisseur de courant suivant l'une des revendications 1 à 6, **caractérisé** par le fait que l'alimentation des modules convertisseurs (1, 11, 21, 31) s'effectue par le deuxième système de barres de liaison (5, 15, 25, 35).

10. Dispositif convertisseur de courant suivant l'une des revendications 1 à 6 et 9, **caractérisé** par le fait que la connexion de charge s'effectue sur le deuxième système de barres de liaison (5, 15, 25, 35).
